# EUROPEAN PATENT SPECIFICATION

(11) **EP 2 873 077 B1**
(45) Date of publication and mention of the grant of the patent: **08.01.2020**
(21) Application number: 13734069.1
(22) Date of filing: 03.07.2013
(51) Int. Cl.: G02B 6/44, H01B 7/29, H01B 7/295, H02G 15/184, H02G 15/04, H02G 15/18

(54) **CONTAINER FOR AN ELECTRIC OR OPTICAL CONDUCTOR**
BEHÄLTER FÜR EINEN ELEKTRISCHEN ODER OPTISCHEN LEITER
RÉCEPTACLE POUR CONDUCTEUR ÉLECTRIQUE OU OPTIQUE

(30) Priority: 12.07.2012 DE 102012212205
(43) Date of publication of application: 20.05.2015
(73) Proprietor: Tyco Electronics Raychem GmbH, 85521 Ottobrunn (DE)
(72) Inventor: SCHAD, Norbert, D-85664 Hohenlinden (DE); HELLIGE, Denny, D-85579 Neubiberg (DE)
(74) Representative: Grünecker Patent- und Rechtsanwälte PartG mbB
(86) International application number: PCT/EP2013/064084
(87) International publication number: WO 2014/009231

(56) References cited:
- EP-A1- 0 646 936
- EP-A1- 1 837 885
- EP-A2- 1 074 998
- WO-A1-97/41569
- DE-U1- 9 216 599
- DE-U1- 29 724 611
- DE-U1-202007 004 369
- US-A- 5 304 740
- US-A1- 2007 251 595

## Description

The present invention relates to a container for an electrical or optical conductor, the use of a gas-permeable, heat-resistant and preferably mechanically flexible casing in such a container and a construction kit for producing a cable connection.

In most cases in which information or energy is transported via electrical or optical conductors, there are stringent requirements for maintaining operation in the event of effects of a fire. To this end, it is known to use multilayer coverings of an inorganic textile material, such as basalt, silica, ceramic material or glass fibre, in combination with a silicone coating which is filled with a flame-retardant means, as illustrated, for example, in WO 2012/033609 A1 or US 2007/0251595 A1. Another protective covering with an internal glass fibre cladding and a silicone rubber cladding which is applied over it is known from EP 0127432 A2.

These known protective coverings are based on the notion of providing textile inorganic carriers with an external flame-retardant coating in order to maintain a cable or a line in an operational state for as long as possible, even in the event of the effects of a fire.

As set out in the article Peter Burger "Zwei Welten: Isolations- und Funktionserhalt, Sicherheitskabel fur den Brandfall" ("Two Worlds: Maintaining insulation and operation, safety cables for the event of a fire") Bulletin SEV/VSE 23/05, pages 27 to 28, cables which are used in commercial tower blocks, department stores, hospitals or tunnels and nuclear power stations must comply with both the insulation maintenance test in accordance with IEC 60331 and the test relating to the maintenance of function in accordance with DIN 4102-12.

The known arrangements therefore encase the textile carrier with a particularly high-quality silicone rubber layer which is filled, for example, with boron.

A disadvantage in the known arrangements is the relatively high material complexity which must be handled and in particular the more difficult capacity for assembly when producing cable connections in situ.

DE 20 2007 004 369 U1 discloses a flexible fire protection material which is formed by at least two layers of textile material and a further layer of a flame retardant that is sandwiched between the two textile layers. The textile layers have a softening temperature of at least 700°C. The three-layered fire protection material is gas tight and in particular oxygen impermeable.

DE 92 16 599 U1 relates to a high temperature-resistant cable. The cable is covered by a ceramic material having a melting point between approximately 250 and 800°C. When melted, this ceramic material forms a flame retardant coating on the cable. At temperatures above 350°C the ceramic material melts into a glassy state and is transformed into a ceramic at temperatures above 800°C.

US 5 304 740 A discloses a fusible link wire for use in an electric circuit comprising a fusible conductor for opening the circuit in response to a given current level, an inner electrical insulation layer surrounding the fusible conductor, a braided sheath positioned over the inner electrical insulation layer for increasing the structural strength of the insulation layer and for holding the inner electrical insulation layer in place in the event of a failure, and an outer protective coating surrounding the sheath and the inner electrical insulation layer for holding the sheath in place during handling or processing of the fusible link wire and for providing protection against the environment.

An object of the present invention is to provide a container and a construction kit for cable connections, which can be fitted in a cost-effective and simple manner and which can nonetheless ensure that operation of cable assemblies is maintained to the greatest possible extent in the event of a fire.

This object is achieved by the subject-matter of the independent patent claims. Advantageous developments of the subject-matter according to the invention are set out in the dependent claims.

The present invention is based on the surprising recognition that sufficient maintenance of operation of an electrical or optical conductor in the event of a fire can also be achieved if the insulation of an electrical or optical conductor, which insulation is applied in the factory and which is, for example, provided with mineral flame-retardant means, is successfully able to be kept at the original location, even in the burnt state, the electrical insulation and the other operational capability of the conductor being maintained for a sufficiently long period of time to accordingly comply with the technical safety requirements with respect to maintaining insulation and operation.

According to the invention, this can be achieved by the provision of an outer casing which comprises a gas-permeable, heat-resistant material. The gas permeability allows the gases or vapours which occur in the event of a fire to be able to dissipate. Owing to the fact that the outer casing is itself heat-resistant, it does not degrade owing to the effect of heat, or degrades only significantly later than the insulation or the conductor material.

The outer casing according to the invention preferably has a mechanical flexibility or resilience so that the maintenance of the insulation in the event of a fire can thereby be complied with in a particularly efficient and reliable manner since the mechanical flexibility or resilience enables the redirections of the conductor or the cable strand which occur in the event of a fire to be followed.

It was able to be shown that, with a cable splice connection, the fitting of a simple electrically insulating element, for example, in the form of an inner casing which substantially has the same properties as the insulation material originally provided, and an outer casing which is fitted thereover according to the present invention already results in a cable structure which complies with the requirements for maintaining the operation for cable assemblies. In particular, according to the present invention, no mica tapes have to be additionally wound and also no additional insulation tubes have to be fitted.

Advantageously, the outer casing according to the present invention is at least partially produced from quartz and/or basalt. In a particularly simple manner, such an outer casing can be produced as a knitted fabric, a braided fabric or a woven fabric. For example, a quartz material which comprises up to more than 99.95% of silicon dioxide and which is in filament form can be used.

These quartz filaments have a diameter between 5 µm and 15 µm, preferably of 11 µm. As known per se, a gas-permeable, mechanically flexible tube can be produced from such a quartz filament by means of braiding, knitting or weaving. Alternatively, however, an embodiment may also be provided in which the outer casing is formed from a rectangular mat or a strip which is intended to be wound around the conductor.

When a mat which surrounds the conductor or the cable strands is used, there is advantageously provision for the insulation which surrounds the conductor to have intumescent properties, that is to say that it foams under the action of heat and in this manner closes any separation joint which may be present.

An outer casing having one or more of the properties set out above is used according to the invention as a gas-permeable, heat-resistant casing for maintaining the operation of an insulation in the event of a fire.

The advantageous properties of the casing material according to the present invention are particularly evident in a construction kit for connecting cables. According to the present invention, after the electrical contact has been closed, it is simply necessary to push only one insulation element which is filled with a flame-retardant means over the connected conductor ends from which the insulation has been removed and subsequently to fit the outer casing material. In order to ensure the required moisture resistance, a hermetically insulating outer plastics bushing can finally further be fitted. In addition to the elements which are required, for example, for crimping or compressing the electrical conductors, the construction kit according to the invention only requires an insulation element which comprises electrically insulating material and which is constructed, for example, in the form of an inner casing and an outer casing material which comprises quartz and/or basalt.

The invention is explained in greater detail below with reference to the appended drawings and embodiments. The features which are provided in the following embodiments may be omitted in accordance with the above explanations or combined in a different manner, if specific advantages which are connected with these features are not relevant or are not particularly relevant. For elements of the invention which are the same or of the same type in terms of structure and/or function, identical reference numerals are used in the individual Figures, respectively.

In the drawings:
Figure 1 shows a container according to a first advantageous embodiment;
Figure 2 shows a container according to a second advantageous embodiment;
Figure 3 shows a container according to a third advantageous embodiment;
Figure 4 shows the operating steps for producing a cable connection according to an exemplary advantageous embodiment;
Figure 5 shows the operating steps for producing a cable end closure according to an exemplary advantageous embodiment;
Figure 6 shows a container according to another advantageous embodiment;
Figure 7 shows a container according to another advantageous embodiment;
Figure 8 shows a container according to another advantageous embodiment.

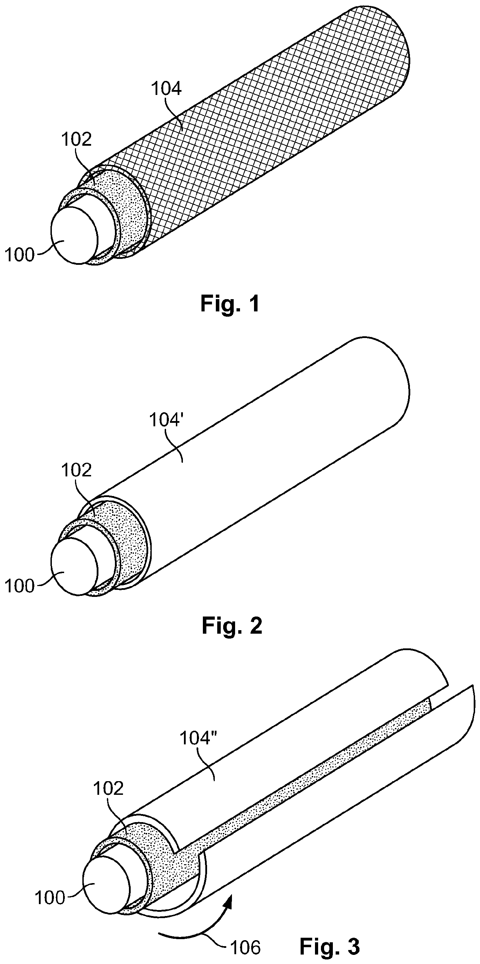

With reference to Figure 1, a container according to a first advantageous embodiment is explained below. As can be seen in Figure 1, an electrical or optical conductor 100 is surrounded by an insulation 102 and an outer casing 104 which may be constructed, for example, in an electrically insulating manner. The conductor 100 may be, for example, a copper line of a low-voltage cable assembly, the insulation already having been fitted in the factory. Of course, the invention may also be used for optical cables.

The insulation 102 comprises an insulation material which is filled with flame-retardant means and which is conventional for use with such cables or end closures. As schematically indicated in Figure 1, there is fitted as an outer casing 104 a braiding in the form of a tube which is produced from quartz according to an advantageous embodiment. This outer casing 104 forms a container for enclosing the insulation remaining in the event of a fire. Owing to the fact that the outer casing 104 is gas-permeable, the gaseous combustion products which occur can be discharged without bringing about a significant deformation of the outer casing. The remaining, mostly mineral residual portions of the insulation 102 are retained at their original location by the outer casing 104 in the event of a fire so that the operational capacity of the insulation is maintained for a specific period of time. The following Table 1 sets out the mechanical and physical properties of a quartz material which is particularly suitable for the outer casing.

**Table 1**

| **Chemical composition** | | | |
|---|---|---|---|
| Components | | ≥ 99.95% SiO₂ | |
| Chemical changes under the influence of temperature: | | none | |

| **Mechanical properties** | | | |
|---|---|---|---|
| Filament diameter | | 11µm | |
| Specific density | | 2.2g/cm³ | |
| Tensile strength in the unaffected state | | 6000 N/mm² | |
| Tensile strength in the wound state | | 3000 - 4000 N/mm² | |
| Modulus of elasticity | | 78 GPa | |

| **Thermal properties** | | | |
|---|---|---|---|
| Long-term temperature stability | | 1000°C | |
| Softening temperature at approx. | | 1650°C | |
| Linear expansion coefficient 0°C - 400°C | | 3.9x10⁻⁷ | |
| Linear expansion coefficient 400°C - 1200°C | | 5.4x10⁻⁷ | |
| Specific heat capacity c (J/Kg-K) | | 14.246 | |
| Thermal conductivity W/(mxK) for solid quartz glass | | 0.0348 | |
| for processed quartz glass | | Depending on processing form | |

| **Electrical properties** | | | |
|---|---|---|---|
| Dielectric constant at 10⁶ Hz | | 3.78 | |
| Dielectric loss factor at 10⁶ Hz | | 0.0001 | |
| Specific resistance at | 20°C (Ω x cm) | | 10¹⁹ |
| | 250°C (Ω x cm) | | 10¹⁰ |
| | 1200°C (Ω x cm) | | 2x10⁷ |

Another significant advantage of the invention is that the outer casing 104 can follow the deformations of the heated conductor 100 in the event of a fire and the remaining insulation material 102 thereby also remains operational in situ when the conductor 100 has been significantly deflected from the original position thereof. The outer casing 104 is formed, for example, by means of a braiding operation, to form a tube. Alternatively, however, it can also be formed by a knitted fabric, woven fabric, fleece or felt.

For a person skilled in the art, it is self-evident that the insulation can also be maintained by means of an outer casing according to the invention which is rigid in the final assembled state.

The outer casing 104 according to the invention therefore fixes a large portion of the burnt insulation material in place in the event of a fire, whilst gases and vapours can be dissipated. The insulation material remaining in the event of a fire is fixed at the original location and a functionally enduring insulation is consequently maintained for a specific period of time. Particularly in the case of a plurality of cable strands of differing polarity which are arranged in direct proximity, the strand insulation is maintained.

Furthermore, the burnt insulation 102 which is fixed in position by the outer casing 104 also forms a temperature barrier, which temporally delays the action of the external temperature, for example, on a copper conductor.

Figure 2 shows an alternative embodiment, in which the outer casing is not formed by a woven fabric, but instead by a pipe-like tube which has a membrane-like structure. For example, glass fibre or quartz fibre filter membranes are suitable for producing this outer casing 104'.

Figure 3 shows another variant of the outer casing 104'' according to the present invention. According to this embodiment, the outer casing 104'' is formed by a mat which is, for example, rectangular in the initial state and which is placed in the direction of the arrow 106 around the insulation 102 on the conductor or the cable strand 100. The blank of the mat in the pre-assembled state may naturally have any shape. The edges can be secured after the assembly, for example, by means of adhesive bonding. Advantageously, the insulation 102 in this embodiment, in addition to the inorganic flame-retardant means, also contains intumescent flame-retardant means which lead to foaming in the event of a fire and thereby fill any gap which may be present at the location of the joint.

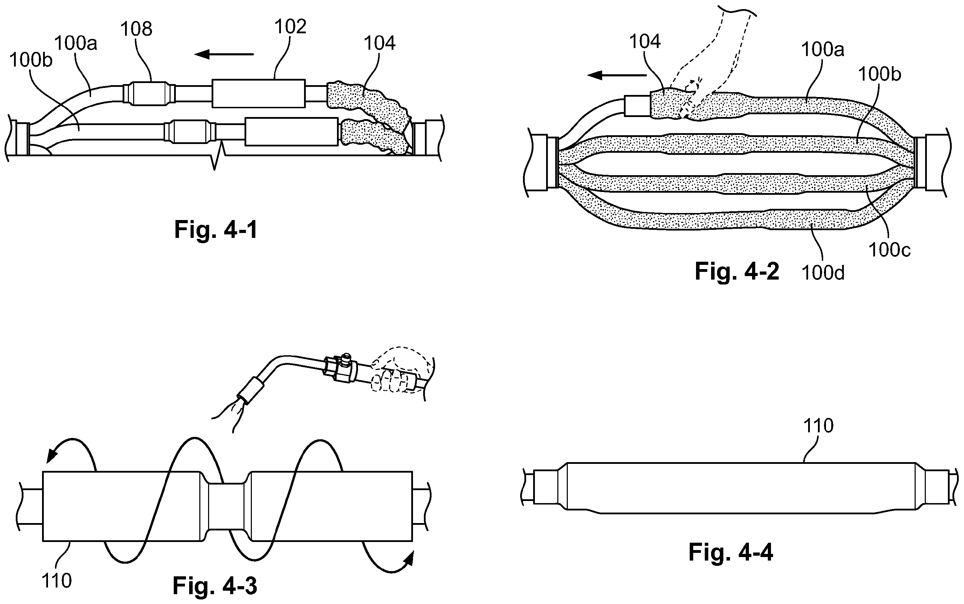

Figure 4 schematically illustrates by way of example the connection of a large number of cable strands using the container according to the invention. The individual strands or conductors 100a, 100b, 100c and 100d of a four-strand cable which is shown in this instance have the insulation removed in the region in which they are intended to be connected to the corresponding counter-piece and are connected to each other by means of electrically conductive connection pieces 108, for example, by means of a crimp connection.

As shown in Figure 4-1, each of the connection regions 108 is subsequently provided with an electrical insulation 102 which can be pushed over the connection region, for example, in the form of an electrically insulating inner casing, the insulation substantially corresponding in terms of its properties to the strand insulation of the individual strands which was applied in the factory and which was removed for the connection.

Figure 4-2 shows that, according to the invention, an outer casing 104 is pushed over each of the strands or conductors. Consequently, the strand arrangement in the state shown in Figure 4-2 is already completely operational and thermally protected. The steps shown in Figures 4-3 and 4-4 relate to additional fitting of a hermetically sealing outer bushing 110, for example, using heat-shrinking technology. Alternatively, the invention can also be used in conjunction with cold-shrinking or cast resin technology. The optionally fitted outer bushing is used primarily for hermetically sealing in cables which are arranged in an environment in which they require particular protection with respect to mechanical and/or chemical loads.

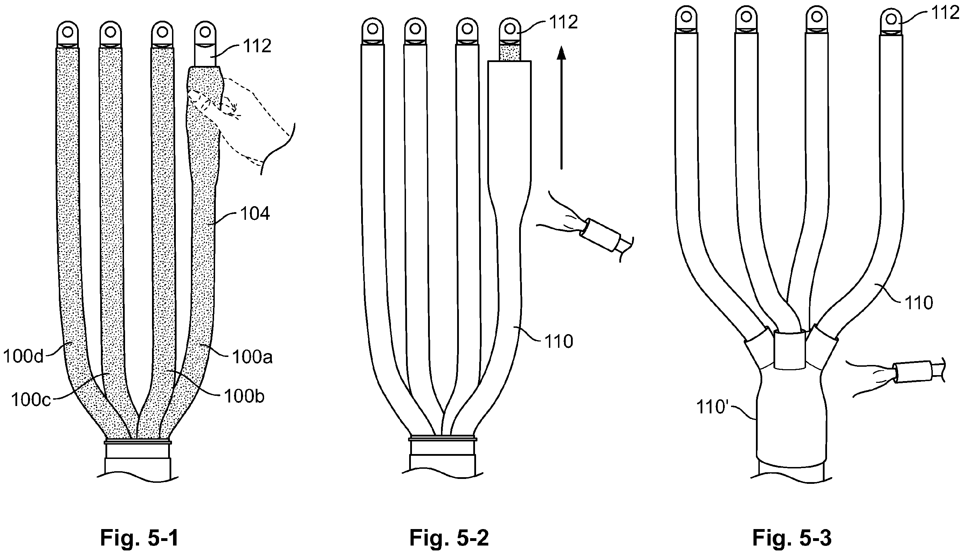

The fitting of cable end closures using the container according to the invention will be explained below with reference to Figure 5. In contrast to the production of a connection between cables, there is fitted in this instance as a closure of the individual strands or conductors 100a, 100b, 100c and 100d a cable lug 112 and the connection location is covered with an insulation material (not visible in Figure 5), respectively. Subsequently, as shown in Figure 5-1, the outer casing 104 is pushed forwards as far as the contact regions of the cable lugs 112.

Figures 5-2 and 5-3 show the assembly of additional first and second outer bushings 110 and 110' which serve to hermetically seal and electrically safeguard the end closure arrangement shown.

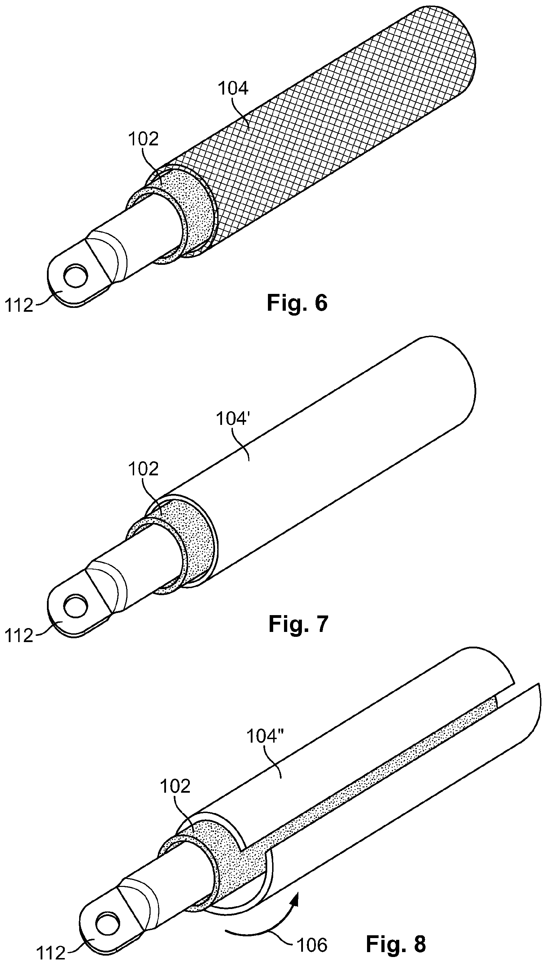

Of course, the embodiments of the present invention explained with reference to Figures 1 to 3 can also be transferred to the case of a cable end closure. This is illustrated schematically in Figures 6 to 8.

As can be seen in Figure 6, an electrical conductor having a cable lug 112 is surrounded by an insulation 102 and an outer casing 104 which may be constructed, for example, in an electrically insulating manner. The outer casing 104 according to the invention therefore fixes a large portion of the burnt insulation material in place in the event of a fire whilst gases and vapours can dissipate. The insulation material remaining in the event of a fire is retained at the original location and a functionally enduring insulation is consequently maintained for a specific period of time. In particular in the case of a plurality of cable strands of differing polarity which are connected by means of the cable lugs 112 in direct proximity, the strand insulation is maintained. Furthermore, as mentioned, the burnt insulation 102 which is fixed in place by the outer casing 104 also forms a temperature barrier, which temporally delays the action of the external temperature, for example, on a copper conductor.

Figure 7 shows an alternative embodiment in which the outer casing is not formed by a woven fabric, but is instead formed by a pipe-like tube which has a membrane-like structure. For example, glass fibre or quartz fibre filter membranes are suitable for the production of this outer casing 104'.

Figure 8 shows another variant of the outer casing 104'' according to the present invention. According to this embodiment, the outer casing 104'' is formed by a mat which is, for example, rectangular in the initial state and which is placed in the direction of the arrow 106 around the insulation 102 on the cable lug 112.

As an alternative to quartz or as an additive, it is also possible to use basalt for the outer casing according to the invention. Basalt is a dark-grey to black, densely medium-grained volcanic stone. The basalt fibre is a 100% inorganic, mineral, continuous filament which can also be produced, for example, with a diameter of 11.0 µm. The physical properties of basalt are set out below in Table 2.

**Table 2**

| **Physical properties** | **Unit** |
|---|---|
| Diameter [µm] | 11.0 |
| Tear strength [mN/tex] | 433 |
| Modulus of elasticity [GPa] | 91 - 110 |
| Linear density [tex] | 121 |
| Flammability (LOI) [%] | 0.4 |
| Thermal application range [°C] min | -260 |
| max. under pressure | +450 |
| max. without pressure | +700 |
| Operating temperature as flame limit | +1200 |
| Melting point [°C] | 1450 |
| Moisture absorption [%] | ≤ 0.1 |
| Linear expansion coefficient [x10⁻⁷/K] | 5.5 |
| Thermal conductivity [W/m.K] | 1.67 |
| Weight loss [%] after 3 hours of baking in: | |
| H₂O | 99.6 |
| 0.5N NaOH | 93.4 |
| 2N NaOH | 6.4 - 77.3 |
| 2N H₂SO₄ | 66.4 - 98.5 |

In addition to the advantages already mentioned, the invention enables simple assembly of the outer casing, the position of the conductor or the cable connection after the assembly, that is to say, the orientation in the horizontal and vertical spatial direction, having no influence on the function of the maintenance.

The invention can advantageously be used not only with continuous conductors or cable strands or cable connections, but also with cable end closures.

**List of reference numerals:**

| **Reference numeral** | **Description** |
|---|---|
| 100 | Conductor |
| 102 | Insulation |
| 104, 104', 104" | Outer casing |
| 106 | Winding direction |
| 108 | Connection pieces |
| 110, 110' | Outer sleeve |
| 112 | Cable lug |

## Claims

1. Container for an electrical or optical conductor (100) comprising:
an insulation (102) which is produced from an insulator which is filled with an intumescent flame-retardant means and which can be fitted to the conductor (100) so as to at least partially surround it,
an outer casing (104) which is produced from a gas-permeable, heat-resistant material and which surrounds the insulation (102) in such a manner that the function of the insulation is maintained for a specific period of time in the event of a fire,
wherein the outer casing (104) contains quartz and/or basalt and is a part separate from the insulation (102), and
wherein the insulation (102) and the outer casing (104) are the only parts of the container.

2. Container according to claim 1, wherein the outer casing (104) is produced from a flexible or resilient material.

3. Container according to any one of the preceding claims, wherein the outer casing (104) contains a knitted fabric, a braided fabric, or a woven fabric.

4. Container according to any one of the preceding claims, wherein the outer casing (104) is constructed as a tube or a mat.

5. Container according to any one of the preceding claims, wherein the outer casing (104) is produced from a quartz filament which has a diameter in the range between 5 µm and 15 µm, preferably of 11 µm.

6. Container according to any one of the preceding claims, wherein the insulation (102) contains a mineral flame-retardant means.

7. Use of a gas-permeable, heat-resistant casing (104) for maintaining the function of an insulation (102) in the event of a fire, wherein said insulation (102) is produced from an insulator which is filled with an intumescent flame-retardant means and which at least partially surrounds an electrical or optical conductor (100), and wherein the outer casing (104) contains quartz and/or basalt and is a part separate from the insulation (102), and wherein the insulation (102) and the outer casing (104) are the only parts of the container.

8. Construction kit for producing a cable connection or a cable joint, comprising:
an electrically insulating material (102) which is produced from an insulator which is filled with an intumescent flame-retardant means and which is used to insulate a connection region (108) of the cable connection or a joint region,
an outer casing material (104) which is produced from a gas-permeable, heat-resistant material and which serves to maintain the function of the insulating material (102) at least in the connection region (108) in the event of a fire,
wherein the outer casing (104) contains quartz and/or basalt and is a part separate from the insulation (102), and wherein the insulation material (102) and the outer casing material (104) are the only parts forming a container that surrounds the cable connection or cable joint.

9. Construction kit according to claim 8, wherein the outer casing material (104) is mechanically flexible or resilient in the final assembled state.

10. Construction kit according to any one of claims 8 to 9, wherein the outer casing material (104) contains a knitted fabric, a braided fabric, or a woven fabric.

11. Construction kit according to any one of claims 8 to 10, wherein the outer casing material is constructed as a tube or a mat.

12. Construction kit according to any one of claims 8 to 11, wherein the outer casing material (104) is produced from a quartz filament which has a diameter in the range between 5 µm and 15 µm, preferably of 11 µm.

13. Construction kit according to any one of claims 8 to 12, wherein the electrically insulating material (102) contains a mineral flame-retardant means.

## Patentansprüche

1. Behälter für einen elektrischen oder optischen Leiter (100), umfassend:
eine Isolierung (102), die aus einem Isolator hergestellt ist, der mit einem intumeszierenden flammhemmenden Mittel gefüllt ist und der so auf den Leiter (100) aufgepasst werden kann, dass er ihn wenigstens teilweise umgibt,
eine äußere Verkleidung (104), die aus einem gasdurchlässigen, hitzebeständigen Material hergestellt ist und die die Isolierung (102) so umgibt, dass die Funktion der Isolierung im Falle eines Brandes für einen bestimmten Zeitraum erhalten bleibt,
wobei die äußere Verkleidung (104) Quarz und/oder Basalt enthält und ein von der Isolierung (102) getrennter Teil ist, und
wobei die Isolierung (102) und die äußere Verkleidung (104) die einzigen Teile des Behälters sind.

2. Behälter nach Anspruch 1, wobei die äußere Verkleidung (104) aus einem flexiblen oder elastischen Material hergestellt ist.

3. Behälter nach einem der vorangehenden Ansprüche, wobei die äußere Verkleidung (104) ein Gewirk, ein Geflecht oder ein Gewebe enthält.

4. Behälter nach einem der vorangehenden Ansprüche, wobei die äußere Verkleidung (104) als eine Röhre oder eine Matte konstruiert ist.

5. Behälter nach einem der vorangehenden Ansprüche, wobei die äußere Verkleidung (104) aus einer Quarzfaser hergestellt ist, die einen Durchmesser im Bereich zwischen 5 µm und 15 µm, vorzugsweise 11 µm, hat.

6. Behälter nach einem der vorangehenden Ansprüche, wobei die Isolierung (102) ein mineralisches flammhemmendes Mittel enthält.

7. Verwendung einer gasdurchlässigen, hitzebeständigen Verkleidung (104) zum Aufrechterhalten der Funktion einer Isolierung (102) im Falle eines Brandes, wobei die Isolierung (102) aus einem Isolator hergestellt ist, der mit einem intumeszierenden flammhemmenden Mittel gefüllt ist und der einen elektrischen oder optischen Leiter (100) wenigstens teilweise umgibt, die äußere Verkleidung (104) Quarz und/oder Basalt enthält und ein von der Isolierung (102) getrennter Teil ist, und die Isolierung (102) und die äußere Verkleidung (104) die einzigen Teile des Behälters sind.

8. Bausatz zur Herstellung einer Kabelverbindung oder einer Kabelbrücke, umfassend:
ein elektrisch isolierendes Material (102), das aus einem Isolator hergestellt ist, der mit einem intumeszierenden flammhemmenden Mittel gefüllt ist und dazu dient, einen Anschlussbereich (108) der Kabelverbindung oder einen Verbindungsbereich zu isolieren,
ein Material einer äußeren Verkleidung (104), das aus einem gasdurchlässigen, hitzebeständigen Material hergestellt ist und das dazu dient, die Funktion des isolierenden Materials (102) wenigstens in dem Anschlussbereich (108) im Falle eines Brandes aufrechtzuerhalten,
wobei die äußere Verkleidung (104) Quarz und/oder Basalt enthält und ein von der Isolierung (102) getrennter Teil ist, und wobei das isolierende Material (102) und das Material der äußeren Verkleidung (104) die einzigen Teile sind, die einen Behälter bilden, der die Kabelverbindung oder Kabelbrücke umgibt.

9. Bausatz nach Anspruch 8, wobei das Material der äußeren Verkleidung (104) in dem fertig montierten Zustand mechanisch flexibel oder elastisch ist.

10. Bausatz nach einem der Ansprüche 8 bis 9, wobei das Material der äußeren Verkleidung (104) ein Gewirk, ein Geflecht oder ein Gewebe enthält.

11. Bausatz nach einem der Ansprüche 8 bis 10, wobei das Material der äußeren Verkleidung (104) als eine Röhre oder eine Matte konstruiert ist.

12. Bausatz nach einem der Ansprüche 8 bis 11, wobei das Material der äußeren Verkleidung (104) aus einer Quarzfaser hergestellt ist, die einen Durchmesser im Bereich zwischen 5 µm und 15 µm, vorzugsweise 11 µm, hat.

13. Bausatz nach einem der Ansprüche 8 bis 12, wobei das elektrisch isolierende Material (102) ein mineralisches flammhemmendes Mittel enthält.

## Revendications

1. Conteneur pour conducteur électrique ou optique (100) comprenant :
une isolation (102) qui est produite à partir d'un isolant qui est rempli d'un moyen ignifuge intumescent et qui peut être montée sur le conducteur (100) de manière à l'entourer au moins partiellement,
une enveloppe extérieure (104) qui est produite à partir d'un matériau résistant à la chaleur et perméable aux gaz et qui entoure l'isolation (102) de telle sorte que la fonction de l'isolation est maintenue pendant une période de temps spécifique en cas d'incendie,
dans lequel l'enveloppe extérieure (104) contient du quartz et/ou du basalte et est une partie séparée de l'isolation (102), et
dans lequel l'isolation (102) et l'enveloppe extérieure (104) sont les seules parties du conteneur.

2. Conteneur selon la revendication 1, dans lequel l'enveloppe extérieure (104) est produite à partir d'un matériau souple ou élastique.

3. Conteneur selon l'une quelconque des revendications précédentes, dans lequel l'enveloppe extérieure (104) contient un tissu tricoté, un tissu tressé, ou un tissu tissé.

4. Conteneur selon l'une quelconque des revendications précédentes, dans lequel l'enveloppe extérieure (104) est construite sous forme d'un tube ou d'un tapis.

5. Conteneur selon l'une quelconque des revendications précédentes, dans lequel l'enveloppe extérieure (104) est produite à partir d'un filament de quartz qui a un diamètre compris entre 5 µm et 15 µm, de préférence de 11 µm.

6. Conteneur selon l'une quelconque des revendications précédentes, dans lequel l'isolation (102) contient un moyen ignifuge minéral.

7. Utilisation d'une enveloppe (104) résistante à la chaleur et perméable aux gaz pour maintenir la fonction d'une isolation (102) en cas d'incendie, dans laquelle ladite isolation (102) est produite à partir d'un isolant qui est rempli d'un moyen ignifuge intumescent et qui entoure au moins partiellement un conducteur électrique ou optique (100), et dans laquelle l'enveloppe extérieure (104) contient du quartz et/ou du basalte et est une partie séparée de l'isolation (102), et dans laquelle l'isolation (102) et l'enveloppe extérieure (104) sont les seules parties du conteneur.

8. Kit de construction pour produire une connexion de câble ou un raccord de câble, comprenant :
un matériau électriquement isolant (102) qui est produit à partir d'un isolant qui est rempli d'un moyen ignifuge intumescent et qui est utilisé pour isoler une région de connexion (108) de la connexion de câble ou une région de raccord,
un matériau d'enveloppe extérieure (104) qui est produit à partir d'un matériau résistant à la chaleur et perméable aux gaz et qui sert à maintenir la fonction du matériau isolant (102) au moins dans la région de connexion (108) en cas d'incendie, dans lequel l'enveloppe extérieure (104) contient du quartz et/ou du basalte et est une partie séparée de l'isolation (102), et dans lequel le matériau isolant (102) et le matériau d'enveloppe extérieure (104) sont les seules parties formant un conteneur qui entoure la connexion de câble ou le raccord de câble.

9. Kit de construction selon la revendication 8, dans lequel le matériau d'enveloppe extérieure (104) est mécaniquement souple ou élastique dans l'état assemblé final.

10. Kit de construction selon l'une quelconque des revendications 8 à 9, dans lequel le matériau d'enveloppe extérieure (104) contient un tissu tricoté, un tissu tressé, ou un tissu tissé.

11. Kit de construction selon l'une quelconque des revendications 8 à 10, dans lequel le matériau d'enveloppe extérieure est construit sous forme d'un tube ou d'un tapis.

12. Kit de construction selon l'une quelconque des revendications 8 à 11, dans lequel le matériau d'enveloppe extérieure (104) est produit à partir d'un filament de quartz qui a un diamètre compris entre 5 µm et 15 µm, de préférence de 11 µm.

13. Kit de construction selon l'une quelconque des revendications 8 à 12, dans lequel le matériau électriquement isolant (102) contient un moyen ignifuge minéral.
